(19) Europäisches Patentamt / European Patent Office / Office européen des brevets

(11) **EP 2 422 178 B1**

(12) **FASCICULE DE BREVET EUROPEEN**

(45) Date de publication et mention de la délivrance du brevet:
**06.12.2017 Bulletin 2017/49**

(21) Numéro de dépôt: **10718629.8**

(22) Date de dépôt: **16.04.2010**

(51) Int Cl.:
*G01M 13/02* *(2006.01)*  *G01M 13/04* *(2006.01)*
*G01M 13/00* *(2006.01)*  *F16C 19/52* *(2006.01)*

(86) Numéro de dépôt international:
**PCT/FR2010/000317**

(87) Numéro de publication internationale:
**WO 2010/122240 (28.10.2010 Gazette 2010/43)**

(54) **PROCÉDÉ DE DÉTECTION D'UN DÉFAUT STRUCTUREL D'UN ENSEMBLE MÉCANIQUE COMPRENANT UN ORGANE TOURNANT**

VERFAHREN ZUM DETEKTIEREN EINES STRUKTURDEFEKTS IN EINER MECHANISCHEN BAUGRUPPE MIT EINEM DREHGLIED

METHOD FOR DETECTING A STRUCTURAL DEFECT IN A MECHANICAL ASSEMBLY INCLUDING A ROTARY MEMBER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.04.2009 FR 0901988**

(43) Date de publication de la demande:
**29.02.2012 Bulletin 2012/09**

(73) Titulaire: **NTN-SNR Roulements 74010 Annecy (FR)**

(72) Inventeurs:
• **DESBIOLLES, Pascal**
  **F-74570 Thorens-Glieres (FR)**
• **ELBADAOUI, Mohamed**
  **F-42153 Riorges (FR)**
• **MUSY, Olivier**
  **F-74000 Annecy (FR)**
• **REMOND, Didier**
  **F-69740 Genas (FR)**

(74) Mandataire: **Sayettat, Julien Christian et al Strato-IP 63, Boulevard de Ménilmontant 75011 Paris (FR)**

(56) Documents cités:
**FR-A- 1 605 154**    **FR-A- 2 814 238**
**FR-A- 2 872 905**    **US-A1- 2002 139 191**
**US-A1- 2005 171 723**

## Description

L'invention concerne un procédé de détection d'un défaut structurel d'un ensemble mécanique comprenant un organe tournant ainsi que l'application d'un tel procédé au diagnostic embarqué de l'état d'usure d'un ensemble mécanique comprenant un organe tournant pour un véhicule automobile.

En particulier, l'invention peut être mise en oeuvre pour la détection d'un défaut structurel de l'organe tournant d'un palier, notamment de la bague tournante d'un roulement, de guidage en rotation d'un ensemble mécanique. En variante, l'invention peut être mise en oeuvre pour la détection d'un défaut structurel d'un autre organe, y compris fixe, d'un ensemble mécanique comprenant un organe tournant.

Par exemple, l'ensemble mécanique peut appartenir à une boîte de vitesses, un motoréducteur, un variateur de vitesse, un autodémarreur, une turbine, un réacteur, une transmission, un embrayage, une broche ou un support de broche d'usinage.

La mise en oeuvre d'un procédé de détection d'un défaut structurel permet à l'organe tournant de remplir également une fonction de collecte d'informations, afin notamment de pouvoir assurer :

- un diagnostic ou une surveillance embarqué de pièces mécaniques, notamment d'usure, d'un véhicule automobile, par exemple une surveillance d'un vilebrequin, un diagnostic d'un roulement ou d'un engrenage de distribution ;
- une mise au point d'un prototype d'un système dynamique en rotation, par exemple d'un alterno-démarreur ;
- une surveillance d'un parc de machines, par exemple de broches de machine outils, de réducteurs, de transmission d'éoliennes.

Pour détecter un défaut structurel, on réalise classiquement une analyse vibratoire de l'ensemble mécanique en exploitant des signaux délivrés par des accéléromètres. Toutefois, cette réalisation nécessite d'ajouter des accéléromètres qui, outre leur coût, présentent des contraintes importantes d'intégration dans l'ensemble mécanique comprenant un organe tournant (voir par exemple le document US 2002/139191 A1).

Le document FR 2 872 905 A divulgue un procédé de détermination d'une condition de roulage par analyse harmonique spatiale de la vitesse.

Les document FR 2 814 238 A divulgue un procédé de surveillance de l'état d'un pneumatique consistant à mesurer un signal proportionnel à la vitesse de rotation de la roue, à calculer un signal harmonique du tour de roue (de préférence égal aux énergies harmoniques de ce signal) puis à comparer le résultat à un seuil et à déclencher une alarme lors du franchissement de ce seuil.

Le document US 2005/171723 A1 divulgue un procédé de surveillance d'une perte de pression dans un pneumatique consistant à détecter les variations de vitesse angulaire d'une roue dans un tour de roue et à analyser ces variations dans le domaine fréquentiel. L'invention vise à perfectionner l'art antérieur en proposant notamment un procédé de détection d'un défaut structurel d'un ensemble mécanique comprenant un organe tournant qui ne nécessite pas de moyens de mesure difficilement implantables, ledit procédé étant particulièrement simple et fiable dans sa mise en oeuvre, notamment en étant indépendant de la vitesse de rotation de l'organe tournant ainsi que des sollicitations extérieures subies par ledit ensemble.

A cet effet, et selon un premier aspect, l'invention propose un procédé de détection d'un défaut structurel d'un ensemble mécanique comprenant un organe tournant, ledit procédé prévoyant une analyse préalable d'identification d'une fréquence caractéristique de l'apparition du défaut sur un tour de rotation dudit organe, et les étapes itératives de :

- mesure de la vitesse instantanée de rotation de l'organe tournant ;
- échantillonnage angulaire de ladite mesure pour obtenir un signal échantillonné qui est représentatif de la vitesse instantanée de rotation de l'organe ;
- analyse harmonique spatiale du signal échantillonné pour obtenir un spectre de la vitesse instantanée de rotation de l'organe ;
- surveillance de l'amplitude du spectre pour la fréquence caractéristique de sorte, en fonction de ladite amplitude, à en déduire l'apparition du défaut correspondant.

Selon un deuxième aspect, l'invention propose une application d'un tel procédé au diagnostic embarqué de l'état d'usure d'un ensemble mécanique comprenant un organe tournant pour un véhicule automobile

D'autres objets et avantages de l'invention apparaîtront dans la description qui suit, faite en référence à la figure annexée qui représente un principe d'obtention d'un signal échantillonné représentatif de la vitesse instantanée de rotation d'un organe tournant.

On décrit ci-dessous un procédé de détection d'un défaut structurel d'un ensemble mécanique comprenant un palier à roulement formé d'un organe tournant, d'un organe fixe et d'au moins une rangée de corps roulants disposée entre lesdits organes pour permettre leur rotation relative. En outre, la description est faite en relation avec un palier de guidage en rotation d'un ensemble mécanique qui est embarqué dans un véhicule automobile, notamment un roulement de guidage en rotation d'un arbre de boîte de vitesses.

Toutefois, l'invention peut s'appliquer à la détection d'un défaut structurel d'un autre type d'ensemble mécanique comprenant un organe tournant et/ou dans une autre application, par exemple une application statique comme dans une machine outil portant un organe tournant.

En particulier, le défaut structurel à détecter peut apparaître du fait des contraintes mécaniques induites par la rotation de l'organe tournant. Ainsi, le procédé permet de diagnostiquer un état d'usure de l'ensemble mécanique pour, en assurant une maintenance prédictive, éviter une défaillance dudit ensemble.

Par exemple, dans le cas d'un palier à roulement, le défaut structurel peut être un écaillage de la piste de roulement de l'organe fixe, de l'organe tournant et/ou des corps roulants. Dans le cas d'un ensemble mécanique comprenant un arbre tournant, notamment de transmission, d'une boîte de vitesses ou moteur, le défaut structurel peut être formé sur une dent d'engrenage dudit arbre.

Le procédé prévoit une analyse préalable d'identification d'une fréquence caractéristique de l'apparition d'un défaut structurel sur un tour de rotation de l'organe tournant. En particulier, l'analyse peut être réalisée par étude géométrique de l'ensemble mécanique, en particulier à partir des relations cinématiques entre les différents composants mécaniques dudit ensemble, de sorte à localiser une fréquence identifiant chacun des défauts structurels susceptibles de se produire.

Dans l'exemple d'un palier à roulement, l'identification de la fréquence caractéristique d'un défaut peut être réalisée par calcul de la fréquence de passage d'un corps roulant sur ledit défaut. Ainsi, la fréquence caractéristique peut correspondre à une estimation du nombre de fois par tour qu'un corps roulant passe sur le défaut.

Après l'identification des fréquences caractéristiques de défauts structurels qui sont susceptibles de se produire, le procédé prévoit des étapes itératives de détection du défaut correspondant à l'une de ces fréquences caractéristiques. En variante, le procédé peut être mis en oeuvre pour détecter chacun des défauts susceptibles de se produire.

Le procédé prévoit la mesure de la vitesse instantanée de rotation de l'organe tournant, ladite mesure pouvant être réalisée sur l'organe tournant à surveiller ou sur un autre organe tournant qui lui est associé dans l'ensemble mécanique.

En particulier, la mesure de la vitesse instantanée peut être réalisée au moyen d'un ensemble codeur - capteur. Le codeur est solidaire en rotation de l'organe tournant et peut être de type magnétique en comprenant une piste multipolaire qui présente une succession alternée de pôles magnétiques Nord et Sud dont la géométrie est identique.

En particulier, le codeur peut être fixé sur l'organe tournant ou sur un composant tournant lié en rotation audit organe tournant. Dans l'exemple d'un palier à roulement, le codeur peut être fixé à l'organe tournant pour détecter un défaut structurel sur ledit palier, ou pour détecter un défaut structurel sur l'ensemble tournant qui est guidé en rotation par ledit palier.

Le capteur est fixe et comprend au moins deux éléments sensibles qui sont disposés en regard et à distance de lecture de la piste multipolaire. Dans un exemple de réalisation, les éléments sensibles sont des sondes à effet Hall, des magnétorésistances ou des magnétorésistances géantes. En particulier, le capteur peut comprendre une pluralité d'éléments sensibles alignés tel que décrit dans le document FR-2 792 403.

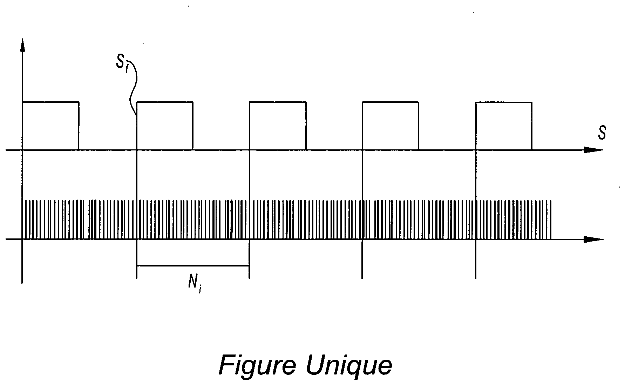

En relation avec la figure 1, on décrit un capteur agencé pour délivrer un signal S comprenant des fronts $S_f$ qui sont espacés d'un pas angulaire constant. En particulier, le signal S délivré par le capteur peut être interpolé de sorte que le pas angulaire séparant les fronts $S_f$ soit inférieur à l'écart angulaire entre les pôles magnétiques.

Le procédé prévoit en outre un échantillonnage angulaire de la mesure de la vitesse instantanée de rotation pour obtenir un signal échantillonné qui est représentatif de ladite vitesse. Dans le mode de réalisation représenté, on mesure le temps écoulé entre deux fronts $S_f$, notamment au moyen d'une carte de comptage qui est couplée au capteur.

En particulier, la mesure du temps peut être effectuée en comptant le nombre d'impulsions $N_i$ d'une horloge haute fréquence f qui séparent deux fronts montants $S_f$ du signal mesuré S, ce qui correspond à un pas angulaire fixé par le nombre de fronts $N_f$ dudit. Ainsi, le signal échantillonné donne le temps écoulé entre chaque front $S_f$ du signal mesuré S de sorte à connaître la vitesse instantanée réelle ω de rotation avec la relation :

$$\omega = \frac{Angle}{Temps} = \frac{2\pi f}{N_f N_i}$$

Dans un exemple de réalisation, le nombre de fronts $N_f$ du signal mesuré S est égal à 2400 par tour, lesdits fronts étant obtenus avec un codeur possédant 60 paires de pôles et une interpolation de 40. En outre, la fréquence f de l'horloge haute fréquence est de 100 MHz.

La vitesse instantanée de rotation étant échantillonnée, le procédé prévoit de réaliser une analyse harmonique du signal échantillonné pour obtenir un spectre de la vitesse instantanée de rotation de l'organe. Selon une réalisation, l'analyse harmonique spatiale est réalisée par transformée de Fourier spatiale (FFT) du signal échantillonné.

En relation avec la figure 1, la transformée de Fourier spatiale peut être réalisée sur la mesure du temps écoulé entre chaque front montant $S_f$. En outre, la mesure de la vitesse instantanée de rotation de l'organe tournant ou du temps écoulé entre chaque front peut être réalisée sur plusieurs tours, par exemple une trentaine de tours, l'analyse harmonique étant alors réalisée sur ce signal échantillonné angulairement de sorte à limiter l'influence des fluctuations de vitesse de rotation de l'organe tournant.

Ensuite, le procédé prévoit une surveillance de l'amplitude du spectre pour la fréquence caractéristique de sorte, en fonction de ladite amplitude, à en déduire l'apparition du défaut correspondant. En variante, plusieurs fréquences caractéristiques peuvent être surveillées de sorte à en déduire l'apparition des défauts identifiées par chacune de ces fréquences.

En particulier, la position fréquentielle des raies du spectre est indépendante de la vitesse de rotation de l'organe tournant puisqu'il s'agit d'événements liés à l'organe tournant et non à des sollicitations extérieures. En effet, le signal est échantillonné angulairement de sorte que l'acquisition des signaux s'affranchit intrinsèquement des fluctuations de vitesse afin de pouvoir comparer de manière exacte les niveaux des différentes fréquences pour différentes conditions de vitesse.

Cette surveillance peut être réalisée dans une fenêtre comprenant la fréquence caractéristique et/ou au moins un harmonique de cette fréquence. En particulier, lorsque plusieurs défauts doivent être détectés chacun au moyen d'une fréquence caractéristique, les fréquences surveillées doivent être différentes pour pouvoir discriminer chacun des défauts.

L'apparition du défaut peut être détectée pour une valeur de l'amplitude du spectre qui est supérieure à un seuil. En outre, on peut prévoir une quantification du défaut en fonction de l'amplitude et/ou de la forme du spectre pour la fréquence caractéristique.

Selon une réalisation, le procédé prévoit en outre une détermination préalable de la signature propre au codeur, ladite signature étant soustraite du signal de la vitesse instantanée pour réaliser la surveillance de l'amplitude sur le spectre obtenu. En effet, la technologie du codeur magnétique induit un bruit spectral pour tous les ordres entiers, cette signature étant également fonction de l'intégration du codeur sur l'organe tournant. Ce filtrage des fréquences aux ordres entiers est particulièrement utile dans le cas où la fréquence à surveiller est un multiple de vitesse de rotation.

## Revendications

1. Procédé de détection d'un défaut structurel d'un ensemble mécanique comprenant un organe tournant, ledit procédé prévoyant une analyse préalable d'identification d'une fréquence caractéristique de l'apparition du défaut sur un tour de rotation dudit organe, et les étapes itératives de :

   - mesure de la vitesse instantanée de rotation de l'organe tournant ;
   - échantillonnage angulaire de ladite mesure pour obtenir un signal échantillonné qui est représentatif de la vitesse instantanée de rotation de l'organe ;
   - analyse harmonique spatiale du signal échantillonné pour obtenir un spectre de la vitesse instantanée de rotation de l'organe ;
   - surveillance de l'amplitude du spectre pour la fréquence caractéristique de sorte, en fonction de ladite amplitude, à en déduire l'apparition du défaut correspondant.

2. Procédé de détection selon la revendication 1, **caractérisé en ce que** l'analyse harmonique spatiale est réalisée par transformée de Fourier spatiale du signal échantillonné.

3. Procédé de détection selon la revendication 1 ou 2, **caractérisé en ce que** la mesure de la vitesse est réalisée au moyen :

   - d'un codeur solidaire en rotation de l'organe tournant, ledit codeur comprenant une piste multipolaire ;
   - d'un capteur fixe comprenant au moins deux éléments sensibles qui sont disposés en regard et à distance de lecture de la piste multipolaire, ledit capteur étant agencé pour délivrer un signal $(S)$ comprenant des fronts $(S_f)$ espacés d'un pas angulaire constant.

4. Procédé de détection selon la revendication 3, **caractérisé en ce que** la piste multipolaire présente une succession alternée de pôles magnétiques Nord et Sud.

5. Procédé de détection selon la revendication 4, **caractérisé en ce que** le pas angulaire séparant les fronts $(S_f)$ est inférieur à l'écart angulaire entre les pôles.

6. Procédé de détection selon l'une quelconque des revendications 3 à 5, **caractérisé en ce qu'**il prévoit en outre la mesure du temps écoulé entre deux fronts $(S_f)$, le signal échantillonné donnant le temps écoulé entre chaque front $(S_f)$ du signal mesuré $(S)$ de sorte à connaître la vitesse instantanée de rotation.

7. Procédé de détection selon l'une quelconque des revendications 3 à 6, **caractérisé en ce qu'**il prévoit une détermination préalable de la signature propre au codeur, ladite signature étant soustraite du signal de la vitesse instantanée pour réaliser la surveillance de l'amplitude sur le spectre obtenu.

8. Procédé de détection selon l'une quelconque des revendications 1 à 7, **caractérisé en ce que** la vitesse instantanée de rotation de l'organe tournant est mesurée sur plusieurs tours, l'analyse harmonique étant réalisée sur ce signal échantillonné angulairement.

9. Procédé de détection selon l'une quelconque des revendications 1 à 8, **caractérisé en ce que** l'identification de la fréquence caractéristique est réalisée par étude géométrique de l'ensemble mécanique.

**10.** Procédé de détection selon l'une quelconque des revendications 1 à 9, **caractérisé en ce que** l'apparition du défaut est détectée pour une valeur de l'amplitude du spectre qui est supérieure à un seuil.

**11.** Procédé de détection selon la revendication 10, **caractérisé en ce qu'**il comprend une quantification du défaut en fonction de l'amplitude et/ou de la forme du spectre pour la fréquence caractéristique.

**12.** Procédé de détection selon l'une quelconque des revendications 1 à 11, **caractérisé en ce que** la surveillance est réalisée à la fréquence caractéristique et/ou à au moins un harmonique de cette fréquence.

**13.** Application d'un procédé selon l'une quelconque des revendications 1 à 12 au diagnostic embarqué de l'état d'usure d'un ensemble mécanique comprenant un organe tournant pour un véhicule automobile.


**Patentansprüche**

**1.** Verfahren zur Detektion eines strukturellen Defekts an einer mechanischen Baugruppe, ein drehendes Organ umfassend, wobei das besagte Verfahren eine vorherige Analyse zur Identifizierung einer typischen Frequenz des Auftretens des Defekts innerhalb einer Umdrehung des besagten Organs vorsieht, sowie die iterativen Schritte:

    - eines Messens der momentanen Drehgeschwindigkeit des drehenden Organs;
    - einer Winkelabtastung der besagten Messung, um ein abgetastetes Signal zu erhalten, das repräsentativ für die momentane Drehgeschwindigkeit des drehenden Organs ist;
    - einer harmonischen räumlichen Analyse des abgetasteten Signals, um ein Spektrum der momentanen Drehgeschwindigkeit des drehenden Organs zu erhalten;
    - einer Überwachung der Amplitude des Spektrums für die typische Frequenz, um davon je nach der besagten Amplitude das Auftreten des entsprechenden Defekts abzuleiten.

**2.** Verfahren zur Detektion nach Anspruch 1, **dadurch gekennzeichnet, dass** die harmonische räumliche Analyse durch eine räumliche Fourier-Transformation des abgetasteten Signals durchgeführt wird.

**3.** Verfahren zur Detektion nach Anspruch 1 oder 2, **dadurch gekennzeichnet, dass** die Messung der Geschwindigkeit durchgeführt wird, anhand:

    - eines Drehgebers, der drehfest mit dem drehenden Organ verbunden ist, wobei der besagte Drehgeber eine mehrpolige Spur umfasst;

    - eines feststehenden Sensors, der zumindest zwei empfindliche Elemente umfasst, die gegenüber und auf Leseabstand zu der mehrpoligen Spur angeordnet sind, wobei der besagte Sensor angeordnet ist, um ein Signal (S) auszugeben, welches Flanken ($S_f$) umfasst, die um einen konstanten Winkelschritt beabstandet sind.

**4.** Verfahren zur Detektion nach Anspruch 3, **dadurch gekennzeichnet, dass** die mehrpolige Spur eine abwechselnde Aufeinanderfolge von magnetischen Nord- und Südpolen aufweist.

**5.** Verfahren zur Detektion nach Anspruch 4, **dadurch gekennzeichnet, dass** der Winkelschritt zum Trennen der Flanken ($S_f$) kleiner ist, als die Winkelabweichung zwischen den Polen.

**6.** Verfahren zur Detektion nach einem der Ansprüche 3 bis 5, **dadurch gekennzeichnet, dass** es weiter die Messung der abgelaufenen Zeit zwischen zwei Flanken ($S_f$) vorsieht, wobei das abgetastete Signal die abgelaufene Zeit zwischen jeder Flanke ($S_f$) des gemessenen Signals (S) gibt, um die momentane Drehgeschwindigkeit zu kennen.

**7.** Verfahren zur Detektion nach einem der Ansprüche 3 bis 6, **dadurch gekennzeichnet, dass** es eine vorherige Bestimmung der dem Drehgeber eigenen Signatur vorsieht, wobei die besagte Signatur vom Signal der momentanen Drehgeschwindigkeit abgezogen wird, um die Überwachung der Amplitude auf dem erhaltenen Spektrum durchzuführen.

**8.** Verfahren zur Detektion nach einem der Ansprüche 1 bis 7, **dadurch gekennzeichnet, dass** die momentane Drehgeschwindigkeit des drehenden Organs über mehrere Umdrehungen hinweg gemessen wird, wobei die harmonische Analyse an diesem winkelig abgetasteten Signal durchgeführt wird.

**9.** Verfahren zur Detektion nach einem der Ansprüche 1 bis 8, **dadurch gekennzeichnet, dass** die Identifizierung der typischen Frequenz durch eine geometrische Studie der mechanischen Baugruppe durchgeführt wird.

**10.** Verfahren zur Detektion nach einem der Ansprüche 1 bis 9, **dadurch gekennzeichnet, dass** das Auftreten des Defekts für einen Amplitudenwert des Spektrums erkannt wird, der großer ist, als ein Grenzwert.

**11.** Verfahren zur Detektion nach Anspruch 10, **dadurch gekennzeichnet, dass** es eine Quantifizierung des Defekts in Abhängigkeit von der Amplitude und/oder der Form des Spektrums für die typische Frequenz umfasst.

**12.** Verfahren zur Detektion nach einem der Ansprüche 1 bis 11, **dadurch gekennzeichnet, dass** die Überwachung mit der typischen Frequenz und/oder zumindest einer Oberwelle dieser Frequenz durchgeführt wird.

**13.** Anwendung eines Verfahrens nach einem der Ansprüche 1, bis 12 zur On-Board-Diagnose des Verschleißzustandes einer mechanischen Baugruppe, ein drehendes Organ für ein Kraftfahrzeug umfassend.

**Claims**

**1.** Method for detecting a structural defect in a mechanical assembly including a rotary member, said method comprising a preliminary analysis for identifying a frequency characteristic of the occurrence of the defect over a revolution of said member, and the iterative steps of:

- measuring the instantaneous rotation speed of the rotary member;
- angularly sampling said measure so as to obtain a sampled signal representative of the instantaneous rotation speed of the member;
- carrying out a harmonic space analysis of the sampled signal so as to obtain a spectrum of the instantaneous rotation speed of the member;
- monitoring the amplitude of the spectrum for the characteristic frequency in such a way, according to said amplitude, to derive the occurrence of the corresponding defect.

**2.** Method for detecting according to claim 1, **characterised in that** the harmonic space analysis is carried out via spatial Fourier transform of the sampled signal.

**3.** Method for detecting according to claim 1 or 2, **characterised in that** the measure of the speed is carried out by means:

- of an encoder integral in rotation with the rotary member, said encoder including a multipolar track;
- of a fixed sensor including at least two sensitive elements which are arranged across from and at a reading distance from the multipolar track, said sensor being arranged to deliver a signal (S) comprising fronts $(S_f)$ separated by a constant angular pitch.

**4.** Method for detecting according to claim 3, **characterised in that** the multipolar track has an alternating succession of North and South magnetic poles.

**5.** Method for detecting according to claim 4, **characterised in that** the angular pitch separating the fronts $(S_f)$ is less than the angular separation between the poles.

**6.** Method for detecting according to any of claims 3 to 5, **characterised in that** it further provides the measurement of the elapsed time between two fronts $(S_f)$, the sampled signal giving the elapsed time between each front $(S_f)$ of the measured signal (S) in such a way as to know the instantaneous rotation speed.

**7.** Method for detecting according to any of claims 3 to 6, **characterised in that** it provides a preliminary determination of the signature that is proper to the encoder, said signature being subtracted from the signal of the instantaneous speed in order to carry out the monitoring of the amplitude over the spectrum obtained.

**8.** Method for detecting according to any of claims 1 to 7, **characterised in that** the instantaneous rotation speed of the rotary member is measured over several revolutions, the harmonic analysis being carried out on this angularly sampled signal.

**9.** Method for detecting according to any of claims 1 to 8, **characterised in that** identifying the characteristic frequency is carried out via a geometric study of the mechanical assembly.

**10.** Method for detecting according to any of claims 1 to 9, **characterised in that** the occurrence of the defect is detected for a value of the amplitude of the spectrum that is higher than a threshold.

**11.** Method for detecting according to claim 10, **characterised in that** it comprises a quantification of the defect according to the amplitude and/or the shape of the spectrum for the characteristic frequency.

**12.** Method for detecting according to any of claims 1 to 11, **characterised in that** the monitoring is carried out at the characteristic frequency and/or at least one harmonic of this frequency.

**13.** Application of a method according to any of claims 1 to 12 to the on-board diagnostics of the state of wear of a mechanical assembly including a rotary member for a motor vehicle.

*Figure Unique*

## RÉFÉRENCES CITÉES DANS LA DESCRIPTION

**Documents brevets cités dans la description**

- US 2002139191 A1
- FR 2872905 A
- FR 2814238 A
- US 2005171723 A1
- FR 2792403